(19) Europäisches Patentamt
European Patent Office
Office européen des brevets

(11) **EP 4 328 598 A1**

(12) **EUROPEAN PATENT APPLICATION**
published in accordance with Art. 153(4) EPC

(43) Date of publication:
**28.02.2024 Bulletin 2024/09**

(21) Application number: **21938043.3**

(22) Date of filing: **02.12.2021**

(51) International Patent Classification (IPC):
**G01R 31/367** (2019.01)     **G01R 31/36** (2020.01)
**G01R 31/389** (2019.01)     **G01R 31/396** (2019.01)

(52) Cooperative Patent Classification (CPC):
**G06F 30/20; G01R 31/36; G01R 31/367;
G01R 31/389; G01R 31/396; G06F 30/367;**
G06F 2119/06

(86) International application number:
**PCT/KR2021/018153**

(87) International publication number:
**WO 2022/225127 (27.10.2022 Gazette 2022/43)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.04.2021 KR 20210050707**

(71) Applicant: **Samsung SDI Co., Ltd.
Yongin-si, Gyeonggi-do 17084 (KR)**

(72) Inventors:
• **KIM, Jake**
  **Yongin-si, Gyeonggi-do 17084 (KR)**
• **BAEK, Ho Yul**
  **Yongin-si, Gyeonggi-do 17084 (KR)**

• **JANG, Yoo Hong**
  **Yongin-si, Gyeonggi-do 17084 (KR)**
• **JOE, Yeong Beom**
  **Yongin-si, Gyeonggi-do 17084 (KR)**
• **KANG, Min Jeong**
  **Yongin-si, Gyeonggi-do 17084 (KR)**
• **AHN, Gi Jang**
  **Yongin-si, Gyeonggi-do 17084 (KR)**
• **HWANG, Yong Jun**
  **Yongin-si, Gyeonggi-do 17084 (KR)**
• **LIM, Byeong Hui**
  **Yongin-si, Gyeonggi-do 17084 (KR)**
• **KIM, Gi Heon**
  **Yongin-si, Gyeonggi-do 17084 (KR)**

(74) Representative: **Marks & Clerk LLP
15 Fetter Lane
London EC4A 1BW (GB)**

(54) **BATTERY SIMULATION METHOD USING TWO-BRANCH EQUIVALENT CIRCUIT MODEL**

(57)     Provided is a battery simulation method performed by a computing device including a processor and a memory. The battery simulation method includes selecting an equivalent circuit model of a battery including first and second branches, setting a capacity ratio of the first and second branches, receiving a current value, estimating a distribution current value distributed to each branch, updating a state of charge (SOC) value of each branch, determining an open circuit voltage value, a series resistance value, a first parallel resistance value, a second parallel resistance value, a first capacitance, and a second capacitance of each branch, based on the SOC value of each branch, determining a first voltage value of both ends of a first parallel resistor and a second voltage value of both ends of a second parallel resistor, of each branch, calculating a G parameter value and an H parameter value of the battery, and calculating an estimated voltage value of the battery

Processed by Luminess, 75001 PARIS (FR)

**(Cont. next page)**

EP 4 328 598 A1

# FIG. 7

```
RECEIVE PARAMETER DATA OF
1-BRANCH EQUIVALENT CIRCUIT MODEL          — S10

            ↓

SET CAPACITY RATIO α                       — S20

            ↓

INPUT CURRENT VALUE                        — S30

            ↓

ESTIMATE CURRENT VALUE DISTRIBUTED
TO EACH BRANCH                             — S40

            ↓

UPDATE SOC VALUE OF EACH BRANCH            — S50

            ↓

UPDATE PARAMETER VALUE OF EACH BRANCH,
BASED ON SOC VALUE OF EACH BRANCH          — S60

            ↓                                        NEXT TIMING    — S110

UPDATE FIRST AND SECOND VOLTAGE VALUES
OF EACH BRANCH                             — S70

            ↓

CALCULATE G PARAMETER VALUE AND
H PARAMETER VALUE OF EACH BRANCH           — S80

            ↓

CALCULATE G PARAMETER VALUE AND
H PARAMETER VALUE OF BATTERY               — S90

            ↓

CALCULATE ESTIMATED VOLTAGE VALUE OF BATTERY — S100
```

## EP 4 328 598 A1

**Description**

TECHNICAL FIELD

The present disclosure relates to a battery simulation method using a 2-branch equivalent circuit model.

BACKGROUND ART

Compared to other energy storage devices, batteries are highly applicable and have relatively high energy, power density, etc., and thus, are widely applied not only to portable devices, but also to electric vehicles (EVs), hybrid electric vehicles (HEVs), or the like, driven by an electrical driving source. To obtain a capacity and output required for each use, a battery pack in which a plurality of batteries are connected to each other in series and in parallel may be used. To efficiently and safely use an electric device driven by a battery or a battery pack, it is necessary to accurately estimate an internal state.

Representative models that may be used to estimate an internal state of a battery may include an equivalent circuit model and an electrochemical model.

An equivalent circuit model (ECM) determines, through preliminary experiments, how virtual equivalent circuit components such as a resistance R, a capacitance C, and an open circuit voltage Voc vary according to variables such as current I, a voltage V, and a temperature T. It takes a lot of time and effort to organize this tendency into a table. Also, when a result is outside an experimental range, reliability may be degraded because extrapolation should be performed. Despite these problems, an ECM has a simple structure, and thus, is widely used in a battery management system (BMS), etc. requiring fast calculation.

An electrochemical model may improve the estimation accuracy of an internal state by electrochemically simulating a phenomenon in a battery. However, the electrochemical model requires too many resources for calculation, and thus, is not as widely used as the ECM.

Even in a simple battery equivalent circuit model, a calculation time increases rapidly when batteries of a battery pack are connected in series and in parallel. In order to overcome these disadvantages, the inventors have developed a GH-ECM method (Korean Patent Application No. 10-2020-0096938). A calculation speed of estimating a battery state in a battery pack has been increased by applying a GH method to an ECM.

DESCRIPTION OF EMBODIMENTS

TECHNICAL PROBLEM

The present disclosure provides a battery simulation method for rapidly and accurately estimating a battery voltage and an internal state by using a GH-two-branch equivalent circuit model (ECM) that improves the accuracy of an ECM while maintaining a high calculation speed of a GH-ECM method.

SOLUTION TO PROBLEM

According to an aspect of the present disclosure, a battery simulation method performed by a computing device including a processor and a memory includes selecting an equivalent circuit model of a battery including first and second branches including a voltage source connected in series, a series resistor, a first parallel resistor and a first capacitor connected in parallel, and a second parallel resistor and a second capacitor connected in parallel, setting a capacity ratio of the first and second branches, receiving a current value, estimating a distribution current value distributed to each branch, updating a state of charge (SOC) value of each branch, based on the distribution current value of each branch, determining an open circuit voltage value, a series resistance value, a first parallel resistance value, a second parallel resistance value, a first capacitance, and a second capacitance of each branch, based on the SOC value of each branch, determining a first voltage value of both ends of the first parallel resistor and a second voltage value of both ends of the second parallel resistor of each branch, calculating a G parameter value and an H parameter value of the battery, based on the open circuit voltage value, the series resistance value, the first voltage value, and the second voltage value, of each branch, and calculating an estimated voltage value of the battery, based on the G parameter value and the H parameter value of the battery.

According to another aspect of the present disclosure, there is provided a computer program stored in a medium to execute a battery simulation method by using a computing device including a processor and a memory.

ADVANTAGEOUS EFFECTS OF DISCLOSURE

The present disclosure has great improvements in terms of accuracy and adaptability, compared to previous methods. An existing equivalent circuit model (ECM) is based on uniformity of a battery because current flows along a single path. However, because non-uniformity in a battery increases in a special situation such as a high C-rate (discharge rate) or a low ambient air temperature, the accuracy of a single path (1-branch) ECM rapidly decreases. The present disclosure may achieve high accuracy even in the above special situation by adopting a plurality of current paths to reflect non-uniformity of a battery in a model.

BRIEF DESCRIPTION OF DRAWINGS

FIG.1 is a schematic diagram illustrating a computing device for performing a battery simulation method, according to an embodiment.
FIG. 2 illustrates a 1-branch equivalent circuit model of a battery.
FIG. 3 illustrates parameter data of a 1-branch equivalent circuit model stored in a memory, according to an embodiment.
FIG. 4A illustrates a series resistance value Rs according to a state of charge (SOC) value of a battery.
FIG. 4B illustrates a first parallel resistance value $Rp_1$ and a second parallel resistance value $Rp_2$ according to an SOC value of a battery.
FIG. 5 illustrates a battery model that performs a battery simulation method, according to an embodiment.
FIG. 6 illustrates a 2-branch equivalent circuit model as a battery model, according to an embodiment.
FIG. 7 is a flowchart for describing a battery simulation method performed by a computing device, according to an embodiment.
FIG. 8 illustrates an estimated voltage value calculated according to a battery simulation method, according to an embodiment.
FIG. 9 illustrates a battery model for performing a method of determining a capacity ratio $\alpha$, according to an embodiment.
FIG. 10 is a flowchart for describing a method of determining a capacity ratio $\alpha$ performed by a computing device, according to an embodiment.

BEST MODE

The advantages and features of the present disclosure, and methods of achieving the same, will become apparent with reference to embodiments of the disclosure described below in detail in conjunction with the accompanying drawings. However, the present disclosure is not limited to embodiments presented below but may be embodied in various different forms, and it is to be appreciated that all changes, equivalents, and substitutes that do not depart from the spirit and technical scope of the present disclosure are encompassed in the present disclosure. The embodiments described below are provided to completely disclose the disclosure so that one of ordinary skill in the art may thoroughly understand the scope of the disclosure. In the description of the present disclosure, certain detailed explanations of the related art are omitted when it is deemed that they may unnecessarily obscure the essence of the present disclosure.
The terms used in the present application are merely used to describe specific embodiments, and are not intended to limit the present disclosure. The singular forms "a," "an," and "the" are intended to include the plural forms as well, unless the context clearly indicates otherwise. Further, as used in this application, the terms "include," "have" and their conjugates may be construed to denote a certain feature, number, step, operation, constituent element, component, or a combination thereof, but may not be construed to exclude the existence or addition of one or more other features, numbers, steps, operations, constituent elements, components, or combinations thereof. It will be understood that although the terms "first," "second," etc. may be used herein to describe various components, these components should not be limited by these terms. The above terms are used only to distinguish one element from another.
A multi-branch ECM proposed in the present disclosure simulates non-uniformity of an internal state of a battery by using two or more branches. This may be microscopically interpreted as non-uniformity in an active material, and may be macroscopically interpreted as non-uniformity of a battery cell. For example, when a battery is discharged at a high discharge rate (C-rate), lithium in an outer part of an active material may be microscopically first used, and lithium in a part close to a battery electrode may be macroscopically preferentially used, thereby causing non-uniformity. To describe internal non-uniformity that inevitably occurs when a battery is used, as many paths as necessary may be used. Also, to better reflect material characteristics, a modification of dividing into a positive electrode portion and a negative electrode portion may be made. In this case, a non-uniform state in a battery may be accurately simulated through sophistication, such as increasing the number of branches connected in parallel or connecting bundles of branches in series.

Although the present disclosure is described assuming that two branches are used, a battery equivalent circuit model using three or more branches may be used when necessary.

Hereinafter, embodiments of the present disclosure will be described in detail with reference to the accompanying drawings, wherein the same or corresponding elements throughout are denoted by the same reference numerals and a repeated description thereof is omitted.

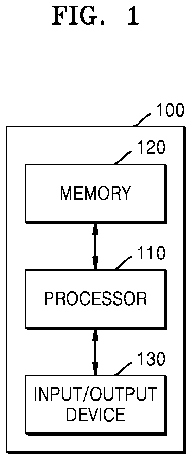

FIG. 1 is a schematic diagram illustrating a computing device for performing a battery simulation method, according to an embodiment.

Referring to FIG. 1, a computing device 100 includes a processor 110, a memory 120, and an input/output device 130.

The processor 110 may perform basic arithmetic, logic, and input/output operations. For example, the processor 110 may execute program code stored in the memory 120 or may read data stored in the memory 120 to use the data for the operations. The processor 110 may perform a battery simulation method according to an embodiment.

The processor 110 may be configured to select an equivalent circuit model of a battery including first and second branches including a voltage source connected in series, a series resistor, a first parallel resistor and a first capacitor connected in parallel, and a second parallel resistor and a second capacitor connected in parallel, set a capacity ratio of the first and second branches, receive a current value, estimate a distribution current value distributed to each branch, update a state of charge (SOC) value of each branch based on the distribution current value of each branch, determine an open circuit voltage value, a series resistance value, a first parallel resistance value, a second parallel resistance value, a first capacitance, and a second capacitance of each branch based on the SOC value of each branch, determine a first voltage value of both ends of the first parallel resistor and a second voltage value of both ends of the second parallel resistor of each branch, calculate a G parameter value and an H parameter value of a battery based on the open circuit voltage value, the series resistance value, the first voltage value, and the second voltage value of each branch, and calculate an estimated voltage value of the battery based on the G parameter value and the H parameter value of the battery.

The processor 110 may achieve simulation of the battery by repeatedly performing a process of receiving a new current value, estimating a distribution current value distributed to each branch in response to the received new current value, determining an SOC value, parameter values, and first and second voltage values of each branch, and calculating a G parameter value and an H parameter value of the battery and an estimated voltage value of the battery.

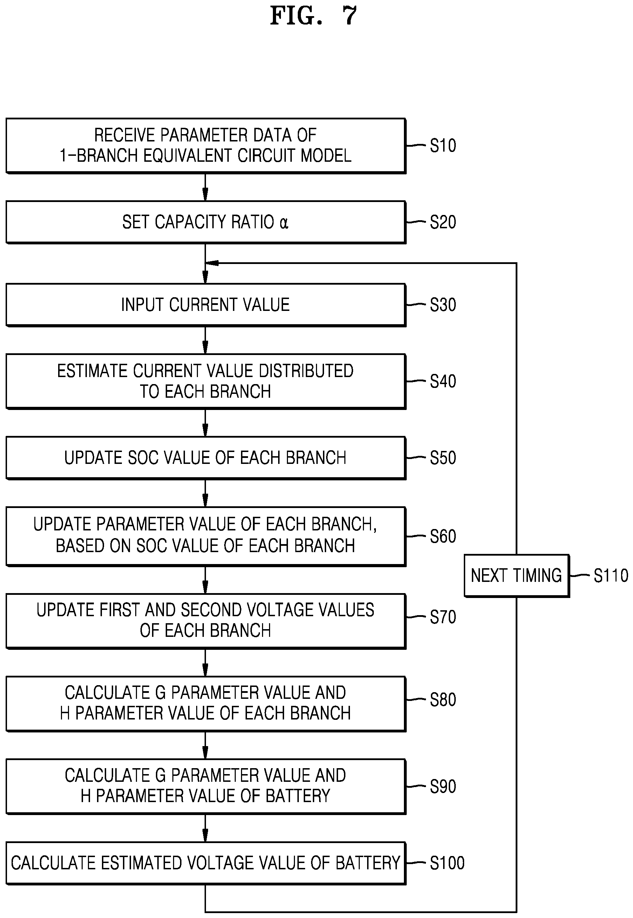

A battery simulation method will now be described in more detail below with reference to FIG. 7.

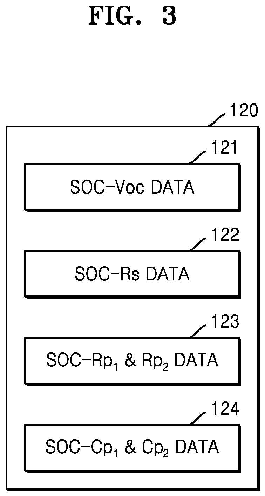

The memory 120 that is a recording medium readable by the processor 110 of the computing device 100 may include a random-access memory (RAM), a read-only memory (ROM), and a permanent mass storage device such as a disk drive. An operating system and at least one program or application code may be stored in the memory 120. Program code for executing a battery simulation method according to an embodiment may be stored in the memory 120. Also, a look-up table defining parameter data of each parameter value used in a 1-branch equivalent circuit model (ECM) illustrated in FIG. 3 in response to an SOC value of a battery may be stored in the memory 120.

The input/output device 130 may receive an input from a user, may transmit the input to the processor 110, and may output information received from the processor 110 to the user. The computing device 100 may include a communication module, and the communication module may receive an input from the user, may transmit the input to the processor 110, and may transmit information received from the processor 110 to the user.

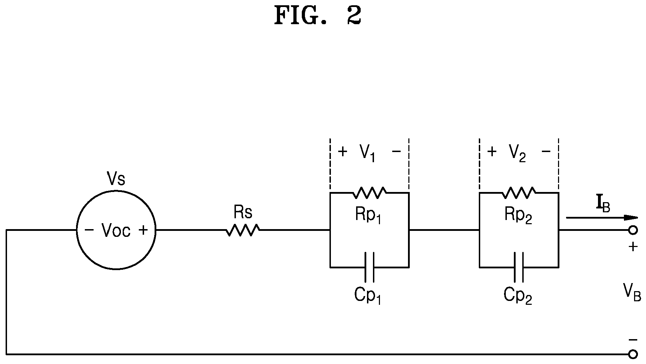

FIG. 2 illustrates a 1-branch equivalent circuit model of a battery.

As shown in FIG. 2, the 1-branch equivalent circuit model may be a second-order Thevenin model. The 1-branch equivalent circuit model includes a voltage source Voc connected in series, a series resistor Rs, a first parallel resistor $Rp_1$ and a first capacitor $Cp_1$ connected in parallel, and a second parallel resistor Rp2 and a second capacitor $Cp_2$ connected in parallel. The voltage source Voc, the series resistor Rs, the first parallel resistor $Rp_1$ and the first capacitor $Cp_1$, and the second parallel resistor $Rp_2$ and the second capacitor $Cp_2$ may constitute one branch.

Battery current $I_B$ indicates discharge current of the battery, and a battery voltage $V_B$ indicates a terminal voltage of the battery. The battery current $I_B$ having a negative value indicates charging current of the battery.

A voltage at both ends of the first parallel resistor $Rp_1$ and the first capacitor $Cp_1$ connected in parallel is represented as a first voltage $V_1$, and a voltage at both ends of the second parallel resistor $Rp_{2and}$ the second capacitor $Cp_2$ is represented as a second voltage $V_2$.

An open circuit voltage value Voc of a voltage source Vs, a series resistance value Rs, a first parallel resistance value $Rp_1$ and a first capacitance $Cp_1$, and a second parallel resistance value $Rp_2$ and a second capacitance $Cp_2$ vary according to an SOC value of the battery. For example, as the SOC value of the battery decreases, the open circuit voltage value Voc of the voltage source Vs decreases and the series resistance value Rs increases.

The open circuit voltage value Voc, the series resistance value Rs, the first parallel resistance value $Rp_1$ and the first capacitance $Cp_1$, and the second parallel resistance value $Rp_2$ and the second capacitance $Cp_2$ according to

the SOC value of the battery may be examined and may be stored in the memory 120.

Although the 1-branch equivalent circuit model is a second-order Thevenin model, the 1-branch equivalent circuit model may be a first-order Thevenin model without the second parallel resistor $Rp_2$ and the second capacitor $Cp_2$.

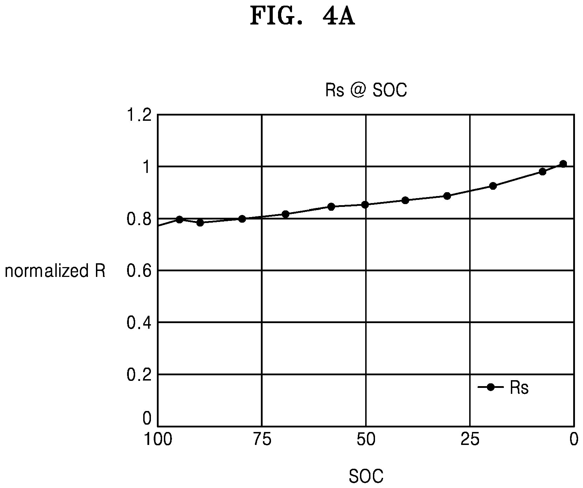

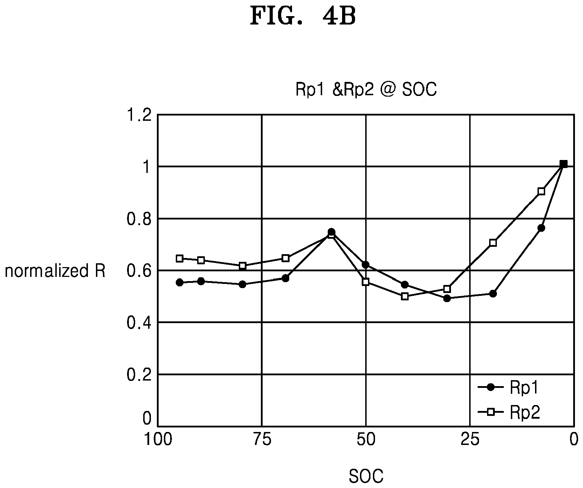

FIG. 3 illustrates parameter data of a 1-branch equivalent circuit model stored in a memory, according to an embodiment. FIG. 4A illustrates a series resistance value Rs according to an SOC value of a battery. FIG. 4B illustrates a first parallel resistance value $Rp_1$ and a second parallel resistance value $Rp_2$ according to an SOC value of a battery.

Referring to FIGS. 2 and 3 together, SOC-Voc data 121 may be stored in the memory 120. An open circuit voltage value Voc of a voltage source Vs according to an SOC value of a battery may be stored as a table in the memory 120.

SOC-Rs data 122 may be stored in the memory 120. A series resistance value Rs according to an SOC value of a battery may be stored as a table in the memory 120. FIG. 4A illustrates a series resistance value Rs according to an SOC value of a battery. As the SOC value of the battery decreases, the series resistance value Rs increases. Although the series resistance value Rs is a normalized value in FIG. 4A, an actual series resistance value Rs may be stored in the memory 120.

SOC-$Rp_1$ & $Rp_2$ data 123 may be stored in the memory 120. A first parallel resistance value $Rp_1$ and a second parallel resistance value $Rp_2$ according to an SOC value of a battery may be stored as a table in the memory 120. FIG. 4B illustrates a first parallel resistance value $Rp_1$ and a second parallel resistance value $Rp_2$ according to an SOC value of a battery. Although the first parallel resistance value $Rp_1$ and the second parallel resistance value $Rp_2$ are normalized values in FIG. 4B, an actual first parallel resistance value $Rp_1$ and an actual second parallel resistance value $Rp_2$ may be stored in the memory 120.

SOC-$Cp_1$ & $Cp_2$ data 124 may be stored in the memory 120. A first capacitance $Cp_1$ and a second capacitance $Cp_2$ according to an SOC value of a battery may be stored as a table in the memory 120. According to another embodiment, because the first capacitance $Cp_1$ and the second capacitance $Cp_2$ do not greatly vary according to the SOC value of the battery, the first capacitance $Cp_1$ and the second capacitance $Cp_2$ may be stored as constants in the memory 120.

Parameter data of the 1-branch equivalent circuit model that is data stored in the memory 120 may include the SOC-Voc data 121, the SOC-Rs data 122, the SOC-$Rp_1$ & $Rp_2$ data 123, and the SOC-$Cp_1$ & $Cp_2$ data 124.

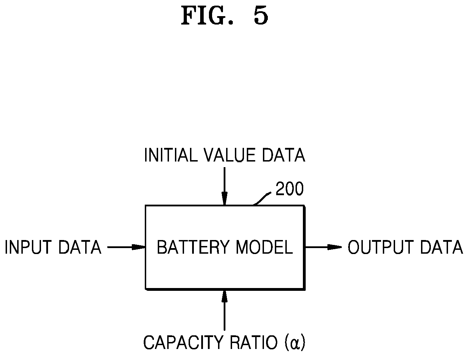

FIG. 5 illustrates a battery model that performs a battery simulation method, according to an embodiment.

Referring to FIG. 5, a battery model 200 may be executed by the processor 110. When program code for executing a battery simulation method stored in the memory 120 is executed by the processor 110, the processor 110 may operate as the battery model 200.

When initial value data and input data are input to the battery model 200, the battery model outputs output data corresponding to the input data. According to an example, the input data may be a current value of a battery, and the output data may be an estimated voltage value of the battery. The initial value data may be parameter data of a 1-branch equivalent circuit model stored in the memory 120.

A capacity ratio $\alpha$ may be input to the battery model 200. The battery model 200 may be a 2-branch equivalent circuit model including a first branch and a second branch. The capacity ratio $\alpha$ is a capacity ratio between the first branch and the second branch, and a capacity of the first branch may be $\alpha$ times a capacity of the second branch. The first branch may be defined as a branch having a larger capacity from among the first branch and the second branch, and the capacity ratio $\alpha$ may be equal to or greater than 1. For example, the capacity ratio $\alpha$ may be a value selected in a range of 1 or more and 10 or less. According to another example, the capacity ratio $\alpha$ may be a value selected in a range of 1 or more and 5 or less. In a specific example, the capacity ratio $\alpha$ may be about 2.2.

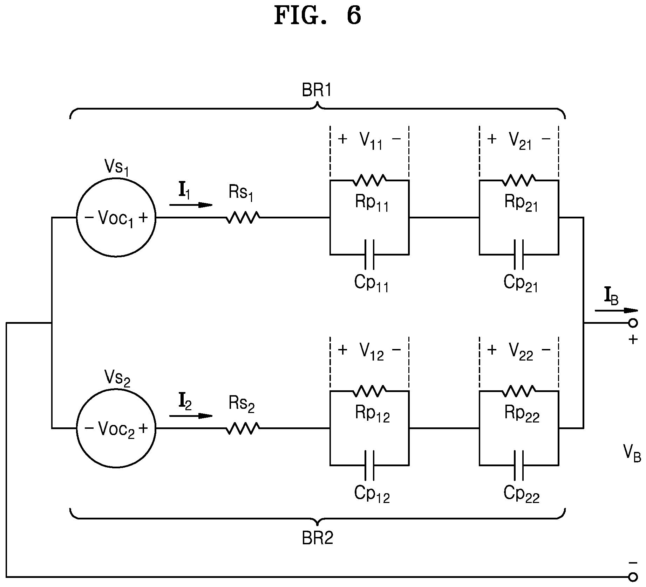

FIG. 6 illustrates a 2-branch equivalent circuit model as a battery model, according to an embodiment.

Referring to FIG. 6, a 2-branch equivalent circuit model models a battery, and includes a first branch BR1 and a second branch BR2 that are connected to each other in parallel. In the present specification, a 2-branch equivalent circuit model is simply referred as an equivalent circuit model, and a 1-branch equivalent circuit model is referred to as a 1-branch equivalent circuit model.

The battery modeled by the 2-branch equivalent circuit model may be one battery cell, a plurality of battery cells connected to each other in series and/or in parallel, or one battery pack including a plurality of battery cells.

A battery cell may include a rechargeable secondary battery. For example, the battery cell may include a nickel-cadmium battery, a lead storage battery, a nickel metal hydride (NiMH) battery, a lithium ion battery, and a lithium polymer battery.

The first branch BR1 includes a voltage source $Vs_1$ connected in series, a series resistor $Rs_1$, a first parallel resistor $Rp_{11}$ and a first capacitor $Cp_{11}$ connected in parallel, and a second parallel resistor $Rp_{21}$ and a second capacitor $Cp_{21}$ connected in parallel. In the first branch BR1, a voltage at both ends of the first parallel resistor $Rp_{11}$ and the first capacitor $Cp_{11}$ connected in parallel is represented as a first voltage $V_{11}$, and a voltage at both ends of the second parallel resistor $Rp_{21}$ and the second capacitor $Cp_{21}$ connected in parallel is represented as a second voltage $V_{21}$.

The second branch BR2 also includes a voltage source $Vs_2$, connected in series, a series resistor $Rs_2$, a first parallel resistor $Rp_{12}$ and a first capacitor $Cp_{12}$ connected in parallel, and a second parallel resistor $Rp_{22}$ and a second

capacitor $Cp_{22}$ connected in parallel. In the second branch BR2, a voltage at both ends of the first parallel resistor $Rp_{12}$ and the first capacitor $Cp_{12}$ connected in parallel is represented as a first voltage $V_{12}$, and a voltage at both ends of the second parallel resistor $Rp_{22}$ and the second capacitor $Cp_{22}$ connected in parallel is represented as a second voltage $V_{22}$.

A capacity $Q_1$ of the first branch BR1 is $\alpha$ times a capacity $Q_2$ of the second branch BR2. The capacity $Q_1$ of the first branch BR1 is $\alpha/(\alpha+1)$ times an overall battery capacity Q, and the capacity $Q_2$ of the first branch BR1 is $1/(\alpha+1)$ times the overall battery capacity Q. The overall battery capacity Q is the same as a sum of the capacity $Q_1$ of the first branch BR1 and the capacity $Q_2$ of the second branch BR2.

Battery current $I_B$ is distributed to the first branch BR1 and the second branch BR2. Current flowing through the first branch BR1 is referred to as first distribution current $I_1$, and current flowing through the second branch BR2 is referred to as second distribution current $I_2$. A sum of the first distribution current $I_1$ and the second distribution current $I_2$ is the same as the battery current $I_B$. A battery voltage $V_B$ is a terminal voltage of the battery.

FIG. 7 is a flowchart for describing a battery simulation method performed by a computing device, according to an embodiment.

Referring to FIG. 7, parameter data of a 1-branch equivalent circuit model that models a battery is received (S10). The parameter data of the 1-branch equivalent circuit model may include at least one of the SOC-Voc data 121 (see FIG. 3), the SOC-Rs data 122 (see FIG. 3), the SOC-$Rp_1$ & $Rp_2$ data 123 (see FIG. 3), and the SOC-$Cp_1$ & $Cp_2$ data 124 (see FIG. 3), and may be stored in the memory 120 (see FIG. 3). According to an example, a first capacitance $Cp_1$ and a second capacitance $Cp_2$ may be constants regardless of an SOC value.

A capacity ratio $\alpha$ of a first branch BR1 and a second branch BR2 may be set (S20). A sum of a capacity $Q_1$ of a first branch BR1 and a capacity $Q_2$ of a second branch BR2 is the same as an overall battery capacity Q. The capacity $Q_1$ of the first branch BR1 is $\alpha/(\alpha+1)$ times the overall battery capacity Q, and the capacity $Q_2$ of the first branch BR1 is $1/(\alpha+1)$ times the overall battery capacity Q.

According to an example, the capacity ratio $\alpha$ may be a value selected in a range of 1 or more and 10 or less. According to another example, the capacity ratio $\alpha$ may be a value selected in a range of 1 or more and 5 or less. In a specific example, the capacity ratio $\alpha$ may be about 2.2.

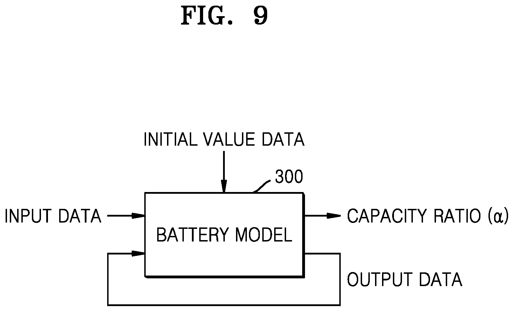

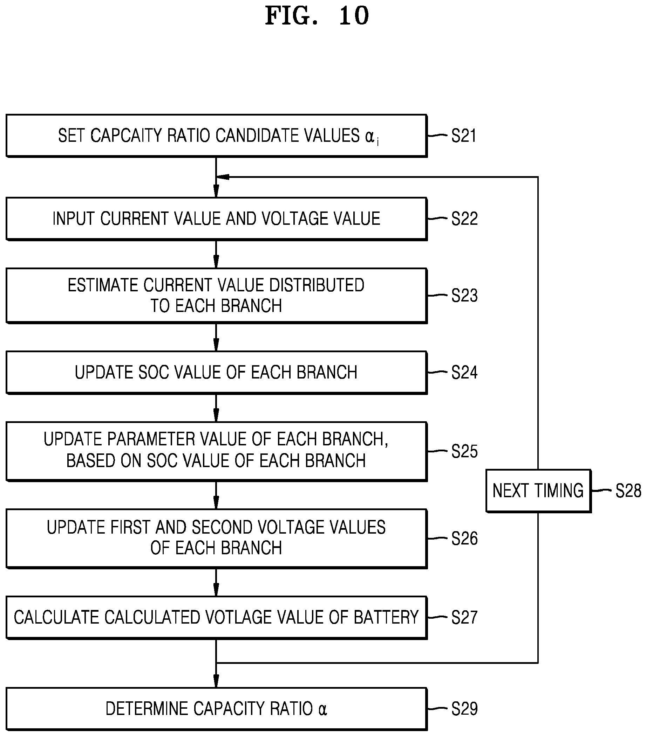

A method of determining the capacity ratio $\alpha$ will be described in more detail below with reference to FIGS. 9 and 10.

According to a battery simulation method according to an embodiment, operations S30 to S110 are repeatedly performed with respect to a current value input to the battery 200 at each pre-set timing interval $\Delta t$, and an estimated voltage value corresponding to the current value input at each pre-set timing interval $\Delta t$ is output at each pre-set timing interval $\Delta t$. When the estimated voltage value is not different from an actual voltage value, the battery model 200 models the actual battery well.

A process of performing operations S30 to S100 from a previous timing k-1 that is earlier than a current timing k by the pre-set timing interval $\Delta t$ will be briefly described.

A current value $I_B[k-1]$ of the previous timing k-1 may be input (S30). Distribution current values $I_1[k-1]$ and $I_2[k-1]$ distributed to the first and second branches BR1 and BR2 are estimated (S40). SOC values $SOC_1[k-1]$ and $SOC_2[k-1]$ of the first and second branches BR1 and BR2 are updated based on the distribution current values $I_1[k-1]$ and $I_2[k-1]$ of the first and second branches BR1 and BR2 (S50).

Open circuit voltage values $Voc_1[k-1]$ and $Voc_2[k-1]$, series resistance values $Rs_1[k-1]$ and $Rs_2[k-1]$, first parallel resistance values $Rp_{11}[k-1]$ and $Rp_{12}[k-1]$, second parallel resistance values $Rp_{21}[k-1]$ and $Rp_{22}[k-1]$, first capacitances $Cp_{11}[k-1]$ and $Cp_{12}[k-1]$, and second capacitances $Cp_{21}[k-1]$ and $Cp_{22}[k-1]$ of the first and second branches BR1 and BR2 are updated based on the SOC values $SOC_1[k-1]$ and $SOC_2[k-1]$ of the first and second branches BR1 and BR2 (S60). First voltage values $V_{11}[k-1]$ and $V_{12}[k-1]$ of both ends of first parallel resistors $Rp_{11}$ and $Rp_{12}$ and second voltage values $V_{21}[k-1]$ and $V_{22}[k-1]$ of both ends of second parallel resistors $Rp_{21}$ and $Rp_{22}$ of the first and second branches BR1 and BR2 are updated (S70).

G parameter values $G_1[k-1]$ and $G_2[k-1]$ and H parameter values $H_1[k-1]$ and $H_2[k-1]$ of the first and second branches BR1 and BR2 may be calculated based on the open circuit voltage values $Voc_1[k-1]$ and $Voc_2[k-1]$, the series resistance values $Rs_1[k-1]$ and $Rs_2[k-1]$, the first voltage values $V_{11}[k-1]$ and $V_{12}[k-1]$, and the second voltage values $V_{21}[k-1]$ and $V_{22}[k-1]$ of the first and second branches BR1 and BR2 (S80). A G parameter value $G_B[k-1]$ and an H parameter value $H_B[k-1]$ of the battery may be calculated based on the G parameter values $G_1[k-1]$ and $G_2[k-1]$ and the H parameter values $H_1[k-1]$ and $H_2[k-1]$ of the first and second branches BR1 and BR2 (S90). An estimated voltage value $V_{B\_est}[k-1]$ of the battery may be calculated based on the G parameter value $G_B[k-1]$ and the H parameter value $H_B[k-1]$ of the battery (S100).

When the pre-set timing interval $\Delta t$ passes (S110) to reach the current timing k, a current value $I_B[k]$ of the current timing k is input (S30). The input current $I_B$ is distributed to the first and second branches BR1 and BR2.

A first distribution current value $I_1[k]$ distributed to the first branch BR1 and a second distribution current value $I_2[k]$ distributed to the second branch BR2 are estimated (S40). The first distribution current value $I_1[k]$) may be estimated based on the first and second open circuit voltage values $Voc_1[k-1]$ and $Voc_2[k-1]$, the first and second series resistance

values $Rs_1[k-1]$ and $Rs_2[k-1]$, and the first voltage values $V_{11}[k-1]$ and $V_{12}[k-1]$ and the second voltage values $V_{21}[k-1]$ and $V_{22}[k-1]$ of the first and second branches BR1 and BR2, updated at the previous timing k-1, and the current value $I_B[k]$ received at the current timing k.

According to an example, the first distribution current value $I_1[k]$ may be estimated by using Equation 1.

[Equation 1]

$$I_1[k] = \{(Voc_1[k-1] - V_{11}[k-1] - V_{21}[k-1]) - (Voc_2[k-1] - V_{12}[k-1] - V_{22}[k-1]) + I_B[k]Rs_2[k-1]\} / (Rs_1[k-1]+Rs_2[k-1])$$

The first and second open circuit voltage values $Voc_1[k-1]$ and $Voc_2[k-1]$ and the first and second series resistance values $Rs_1[k-1]$ and $Rs_2[k-1]$ may be values updated in operation S60 of the previous timing k-1. The first voltage values $V_{11}[k-1]$ and $V_{12}[k-1]$ and the second voltage values $V_{21}[k-1]$ and $V_{22}[k-1]$ of the first and second branches BR1 and BR2 may be values updated in operation S70 of the previous timing k-1.

The second distribution current value $I_2[k]$ may be estimated by using Equation 2.

[Equation 2]

$$I_2[k] = I_B[k] - I_1[k]$$

A first SOC value $SOC_1[k]$ of the first branch BR1 is updated based on the first distribution current value $I_1[k]$, and a second SOC value $SOC_2[k]$ of the second branch BR2 is updated based on the second distribution current value $I_2[k]$ (S50). For example, the first SOC value $SOC_1[k]$ and the second SOC value $SOC_2[k]$ may be calculated by using a current integration method.

According to an example, the first SOC value $SOC_1[k]$ may be calculated based on the first distribution current value $I_1[k]$ and the first SOC value $SOC_1[k-1]$ of the previous timing k-1. For example, the first SOC value $SOC_1[k]$ may be calculated by using Equation 3.

[Equation 3]

$$SOC_1[k] = SOC_1[k-1] - (I_1[k] \times \Delta t) / (3600 \times Q_1)$$

Here, $\Delta t$ is a difference between the previous timing k-1 and the current timing k, that is, the pre-set timing interval $\Delta t$, and $Q_1$ is the capacity of the first branch BR1. The first distribution current value $I_1[k]$ is a value estimated in operation S40.

In the same manner, the second SOC value $SOC_2[k]$ may be calculated based on the second distribution current value $I_2[k]$ and the second SOC value $SOC_2[k-1]$ of the previous timing k-1. For example, the second SOC value $SOC_2[k]$ may be calculated by using Equation 4.

[Equation 4]

$$SOC_2[k] = SOC_2[k-1] - (I_2[k] \times \Delta t) / (3600 \times Q_2)$$

Here, $\Delta t$ is a difference between the previous timing k-1 and the current timing k, that is, the pre-set timing interval $\Delta t$, and $Q_2$ is the capacity of the second branch BR2. The second distribution current value $I_2[k]$ is a value estimated in operation S40.

A first open circuit voltage value $Voc_1[k]$, a first series resistance value $Rs_1[k]$, a first parallel resistance value $Rp_{11}[k]$, a second parallel resistance value $Rp_{21}[k]$, a first capacitance $Cp_{11}[k]$, and a second capacitance $Cp_{21}[k]$ of the first branch BR1 are updated based on the first SOC value $SOC_1[k]$, and a second open circuit voltage value $Voc_2[k]$, a second series resistance value $Rs_2[k]$, a first parallel resistance value $Rp_{11}[k]$, a second parallel resistance value $Rp_{22}[k]$, a first capacitance $Cp_{12}[k]$, and a second capacitance $Cp_{22}[k]$ of the second branch BR2 are updated based on the second SOC value $SOC_2[k]$ (S60).

When the first SOC value $SOC_1[k]$ and the second SOC value $SOC_2[k]$ are determined in operation S50, by using the SOC-Voc data 121 (see FIG. 3) stored in the memory 120 (see FIG. 3), the first open circuit voltage value $Voc_1[k]$ of the first branch BR1 is determined to be a value corresponding to the first SOC value $SOC_1[k]$, and the second open circuit voltage value $Voc_2[k]$ of the second branch BR2 is determined to be a value corresponding to the second SOC value $SOC_2[k]$.

The first series resistance value $Rs_1[k]$ of the first branch BR1 is determined to be a value obtained by multiplying a series resistance value $Rs(SOC_1[k])$ corresponding to the first SOC value $SOC_1[k]$ by a first coefficient k1 by using the SOC-Rs data 122 (see FIG. 3) stored in the memory 120 (see FIG. 3), and the second series resistance value $Rs_2[k]$ of the second branch BR2 is determined to be a value obtained by multiplying a series resistance value $Rs(SOC_2[k])$ corresponding to the second SOC value $SOC_2[k]$ by a sixth coefficient k6 by using the SOC-Rs data 122 (see FIG. 3) stored in the memory 120 (see FIG. 3).

The first coefficient k1 and the sixth coefficient k6 may be determined based on the capacity ratio $\alpha$, and for example, the first coefficient k1 may be $1+1/\alpha$ and the sixth coefficient k6 may be $1+\alpha$.

For example, the first series resistance value $Rs_1[k]$ of the first branch BR1 may be determined to be $(1+1/\alpha)$ * $Rs(SOC_1[k])$, and the second series resistance value $Rs_2[k]$ of the second branch BR2 may be determined to be $(1+\alpha)$ * $Rs(SOC_2[k])$. $Rs(SOC[k])$ is a function for the SOC-Rs data 122 (see FIG. 3), and refers to a series resistance value corresponding to an SOC value $SOC[k]$.

The first parallel resistance value $Rp_{11}[k]$ and the second parallel resistance value $Rp_{21}[k]$ of the first branch BR1 are determined to be values obtained by multiplying a first parallel resistance value $Rp_1(SOC_1[k])$ and a second parallel resistance value $Rp_2(SOC_1[k])$ corresponding to the first SOC value $SOC_1[k]$ by a second coefficient k2 and a third coefficient k3 by using the SOC-$Rp_1$ & $Rp_2$ data 123 (see FIG. 3) stored in the memory 120 (see FIG. 3). The first parallel resistance value $Rp_{12}[k]$ and the second parallel resistance value $Rp_{22}[k]$ of the second branch BR2 are determined to be values obtained by multiplying a first parallel resistance value $Rp_1(SOC_2[k])$ and a second parallel resistance value $Rp_2(SOC_2[k])$ corresponding to the second SOC value $SOC_2[k]$ by a seventh coefficient k7 and an eighth coefficient k8 by using the SOC-$Rp_1$ & $Rp_2$ data 123 (see FIG. 3) stored in the memory 120 (see FIG. 3).

The second coefficient k2, the third coefficient k3, the seventh coefficient k7, and the eighth coefficient k8 may be determined based on the capacity ratio $\alpha$. For example, the second coefficient k2 and the third coefficient k3 may be $1+1/\alpha$, and the seventh coefficient k7 and the eighth coefficient k8 may be $1+\alpha$.

For example, the first parallel resistance value $Rp_{11}[k]$ of the first branch BR1 may be determined to be $(1+1/\alpha)$ * $Rp_1(SOC_1[k]$, and the second parallel resistance value $Rp_{21}[k]$ of the first branch BR1 may be determined to be $(1+1/\alpha)$ * $Rp_2(SOC_1[k]$. The first parallel resistance value $Rp_{12}[k]$ of the second branch BR2 may be determined to be $(1+\alpha)$ * $Rp_1(SOC_2[k])$, and the second parallel resistance value $Rp_{22}[k]$ of the second branch BR2 may be determined to be $(1+\alpha)$ * $Rp_2(SOC_2[k])$. $Rp_1(SOC[k])$ and $Rp_2(SOC[k])$ are functions for the SOC-$Rp_1$ & $Rp_2$ data 123 (see FIG. 3), and refer to first and second parallel resistance values corresponding to the SOC value $SOC[k]$.

The first capacitance $Cp_{11}[k]$ and the second capacitance $Cp_{21}[k]$ of the first branch BR1 are determined to be values obtained by multiplying a first capacitance $Cp_1(SOC_1[k])$ and a second capacitance $Cp_2(SOC_1[k]$ corresponding to the first SOC value $SOC_1[k]$ by a fourth coefficient k4 and a fifth coefficient k5 by using the SOC-$Cp_1$ & $Cp_2$ data 124 (see FIG. 3) stored in the memory 120 (see FIG. 3). The first capacitance $Cp_{12}[k]$ and the second capacitance $Cp_{22}[k]$ of the second branch BR2 are determined to be values obtained by multiplying a first capacitance $Cp_1(SOC_2[k])$ and a second capacitance $Cp_2(SOC_2[k])$ corresponding to the second SOC value $SOC_2[k]$ by a ninth coefficient k9 and a tenth coefficient k10 by using the SOC-$Cp_1$ & $Cp_2$ data 123 (see FIG. 3) stored in the memory 120 (see FIG. 3).

The fourth coefficient k4, the fifth coefficient k5, the ninth coefficient k9, and the tenth coefficient k10 may be determined based on the capacity ratio $\alpha$. For example, the fourth coefficient k4 and the fifth coefficient k5 may be $(1+1/\alpha)^{-1}$, that is, $\alpha/(1+\alpha)$, and the ninth coefficient k9 and the tenth coefficient k10 may be $(1+\alpha)^{-1}$, that is, $1/(1+\alpha)$.

For example, the first capacitance $Cp_{11}[k]$ of the first branch BR1 may be determined to be $\alpha/(1+\alpha)$ * $Cp_1(SOC_1[k])$, and the second capacitance $Cp_{21}[k]$ of the first branch BR1 may be determined to be $\alpha/(1+\alpha)$ * $Cp_2(SOC_1[k])$. The first capacitance $Cp_{12}[k]$ of the second branch BR2 may be determined to be $1/(1+\alpha)$ * $Cp_1(SOC_2[k])$, and the second capacitance $Cp_{22}[k]$ of the second branch BR2 may be determined to be $1/(1+\alpha)$ * $Cp_2(SOC_2[k])$. $Cp_1(SOC[k])$ and $Cp_2(SOC[k])$ are functions for the SOC-$Cp_1$ & $Cp_2$ data 124 (see FIG. 3), and refer to first and second capacitances corresponding to the SOC value $SOC[k]$.

According to another example, the first capacitance $Cp_{11}[k]$ and the second capacitance $Cp_{21}[k]$ of the first branch BR1, and the first capacitance $Cp_{12}[k]$ and the second capacitance $Cp_{22}[k]$ of the second branch BR2 may be determined to be constants regardless of the first SOC value $SOC_1[k]$ and the second SOC value $SOC_2[k]$. In this case, the first capacitance $Cp_{11}[k]$ of the first branch BR1 and the first capacitance $Cp_{12}[k]$ of the second branch BR2 may be $\alpha:1$. Also, the second capacitance $Cp_{21}[k]$ of the first branch BR1 and the second capacitance $Cp_{22}[k]$ of the second branch BR2 may also be $\alpha:1$.

A first voltage value $V_{11}[k]$ and a second voltage value $V_{21}[k]$ of the first branch BR1 and a first voltage value $V_{12}[k]$ and a second voltage value $V_{22}[k]$ of the second branch BR2 are updated (S70).

The first voltage value $V_{11}[k]$ of the first branch BR1 may be updated based on the first voltage value $V_{11}[k-1]$

of the previous timing k-1, and the first distribution current $I_1[k]$, the first parallel resistance value $Rp_{11}[k]$, and the first capacitance $Cp_{11}[k]$ of the current timing k. For example, the first voltage value $V_{11}[k]$ of the first branch BR1 may be calculated according to Equation 5.

[Equation 5]

$$V_{11}[k] = V_{11}[k-1]e^{\frac{-\Delta t}{Rp_{11}[k]Cp_{11}[k]}} + I_1[k]Rp_{11}[k]\left(1 - e^{\frac{-\Delta t}{Rp_{11}[k]Cp_{11}[k]}}\right)$$

The second voltage value $V_{21}[k]$ of the first branch BR1 may be updated based on the second voltage value $V_{21}[k-1]$ of the previous timing k-1, and the first distribution current $I_1[k]$, the second parallel resistance value $Rp_{21}[k]$, and the second capacitance $Cp_{21}[k]$ of the current timing k. For example, the second voltage value $V_{21}[k]$ of the first branch BR1 may be calculated according to Equation 6.

[Equation 6]

$$V_{21}[k] = V_{21}[k-1]e^{\frac{-\Delta t}{Rp_{21}[k]Cp_{21}[k]}} + I_1[k]Rp_{21}[k]\left(1 - e^{\frac{-\Delta t}{Rp_{21}[k]Cp_{21}[k]}}\right)$$

The first voltage value $V_{12}[k]$ of the second branch BR2 may be updated based on the first voltage value $V_{12}[k-1]$ of the previous timing k-1, and the second distribution current $I_2[k]$, the first parallel resistance value $Rp_{11}[k]$, and the first capacitance $Cp_{12}[k]$ of the current timing k. For example, the first voltage value $V_{12}[k]$ of the second branch BR2 may be calculated according to Equation 7.

【Equation 7】

$$V_{12}[k] = V_{12}[k-1]e^{\frac{-\Delta t}{Rp_{12}[k]Cp_{12}[k]}} + I_2[k]Rp_{12}[k]\left(1 - e^{\frac{-\Delta t}{Rp_{12}[k]Cp_{12}[k]}}\right)$$

The second voltage value $V_{22}[k]$ of the second branch BR2 may be updated based on the second voltage value $V_{22}[k-1]$ of the previous timing k-1, and the second distribution current $I_2[k]$, the second parallel resistance value $Rp_{22}[k]$, and the second capacitance $Cp_{22}[k]$ of the current timing k. For example, the second voltage value $V_{22}[k]$ of the second branch BR2 may be calculated according to Equation 8.

【Equation 8】

$$V_{22}[k] = V_{22}[k-1]e^{\frac{-\Delta t}{Rp_{22}[k]Cp_{22}[k]}} + I_2[k]Rp_{22}[k]\left(1 - e^{\frac{-\Delta t}{Rp_{22}[k]Cp_{22}[k]}}\right)$$

A first G parameter value $G_1[k]$ and a first H parameter value $H_1[k]$ of the first branch BR1 may be calculated based on the first open circuit voltage value $Voc_1[k]$, the first series resistance value $Rs_1[k]$, and the first voltage value $V_{11}[k]$ and the second voltage value $V_{21}[k]$ of the first branch BR1, and a second G parameter value $G_2[k]$ and a second H parameter value $H_2[k]$ of the second branch BR2 may be calculated based on the second open circuit voltage value $Voc_2[k]$, the second series resistance value $Rs_2[k]$, and the first voltage value $V_{12}[k]$ and the second voltage value $V_{22}[k]$ of the second branch BR2 (S80).

The first G parameter value $G_1[k]$ is a value indicating a sensitivity of a voltage to a change in current of the first branch BR1, and the first H parameter value $H_1[k]$ is a value indicating an effective potential determined by a local equilibrium potential distribution and a resistance distribution in the second branch BR2. Also, the second G parameter value $G_2[k]$ is a value indicating a sensitivity of a voltage to a change in current of the second branch BR2, and the second H parameter value $H_2[k]$ is a value indicating an effective potential determined by a local equilibrium potential distribution and a resistance distribution in the second branch BR2.

According to an example, the first G parameter value $G_1[k]$ of the first branch BR1 may be determined to be the first series resistance value $Rs_1[k]$, and the second G parameter value $G_2[k]$ of the second branch BR2 may be determined to be the second series resistance value $Rs_2[k]$.

The first H parameter value $H_1[k]$ of the first branch BR1 may be determined to be a value obtained by subtracting the first voltage value $V_{11}[k]$ and the second voltage value $V_{21}[k]$ from the first open circuit voltage value $Voc_1[k]$ of the first branch BR1. Also, the second H parameter value $H_2[k]$ of the second branch BR2 may be determined to be a value obtained by subtracting the first voltage value $V_{12}[k]$ and the second voltage value $V_{22}[k]$ from the second open circuit voltage value $Voc_2[k]$ of the second branch BR2.

A G parameter value $G_B[k]$ and an H parameter value $H_B[k]$ of the battery modeled by the battery model 200 may be calculated based on the first G parameter value $G_1[k]$ and the first H parameter value $H_1[k]$ of the first branch BR1 and the second G parameter value $G_2[k]$ and the second H parameter value $H_2[k]$ of the second branch BR2 (S90).

The G parameter value $G_B[k]$ of the battery is a value indicating a sensitivity of a voltage to a change in current of the battery, and the H parameter value $H_B[k]$ of the battery is a value indicating an effective potential determined by a local equilibrium potential distribution and a resistance distribution in the battery.

The G parameter value $G_B[k]$ of the battery may be calculated by Equation 9.

$$【Equation 9】$$

$$G_B[k] = ((G_1[k])^{-1} + (G_2[k])^{-1})^{-1}$$

The H parameter value $H_B[k]$ of the battery may be calculated by Equation 10.

$$【Equation 10】$$

$$H_B[k] = (H_1[k]/G_1[k] + H_2[k]/G_2[k]) / (1/G_1[k] + 1/G_2[k])$$

An estimated voltage value $V_{B\_est}[k]$ of the battery modeled by the battery model 200 may be calculated based on the G parameter value $G_B[k]$ and the H parameter value $H_B[k]$ of the battery (S100).

The estimated voltage value $V_{B\_est}[k]$ of the battery is a voltage value corresponding to the input current value $I_B[k]$ of the current timing k, and may be calculated by Equation 11.

$$【Equation 11】$$

$$V_{B\_est}[k] = H_B[k] + G_B[k] * I_B[k]$$

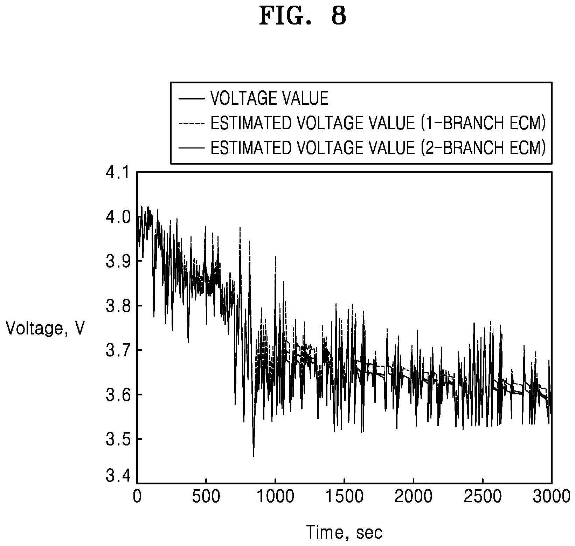

FIG. 8 illustrates an estimated voltage value calculated according to a battery simulation method, according to an embodiment.

FIG. 8 illustrates a voltage value that is actually measured, a voltage value that is estimated by using a 1-branch equivalent circuit model (ECM), and a voltage value that is estimated by using a 2-branch ECM according to the present disclosure.

A mean square error between the actual voltage value and the voltage value estimated by using the 1-branch ECM was 24 mV, and a mean square error between the actual voltage value and the voltage value estimated by using the 2-branch ECM was 15 mV.

A deviation of the voltage value estimated by using the 2-branch ECM was reduced by about 38% compared to the voltage value estimated by using the 1-branch ECM. That is, when the 2-branch ECM according to the present disclosure is used, a battery may be modeled more accurately.

FIG. 9 illustrates a battery model for performing a method of determining a capacity ratio $\alpha$, according to an embodiment.

Referring to FIG. 9, a battery model 300 may be executed by the processor 110. When program code for executing a method of determining a capacity ratio stored in the memory 120 is executed by the processor 110, the processor 110 may operate as the battery model 300. The battery model 300 may be the same as the battery model 200.

When initial value data and input data are input to the battery model 300, the battery model 300 outputs output data corresponding to the input data. The output data is input back to the battery model 300. Pre-set capacity ratio candidate values $\alpha_i$ may be input to the battery model 300. The battery model 300 may determine an optimal capacity ratio $\alpha$. The input data may be a current value of a battery, and the output data may be a calculated voltage value of the battery. The initial value data may be parameter data of a 1-branch ECM stored in the memory 120.

FIG. 10 is a flowchart for describing a method of determining a capacity ratio $\alpha$ performed by a computing device, according to an embodiment. A method of determining the capacity ratio $\alpha$ may be performed in operation S20 of FIG. 7.

Referring to FIG. 10, parameter data of a 1-branch ECM that models a battery may be received in operation S10 of FIG. 7, and the parameter data of the 1-branch ECM may include at least one of the SOC-Voc data 121 (see FIG. 3), the SOC-Rs data 122 (see FIG. 3), the SOC-Rp$_1$ & Rp$_2$ data 123 (see FIG. 3), and the SOC-Cp$_1$ & Cp$_2$ data 124 (see FIG. 3), and may be stored in the memory 120 (see FIG. 3).

Capacity ratio candidate values $\alpha_i$ of a first branch BR1 and a second branch BR2 may be set (S21). It is assumed that a capacity of the first branch is $\alpha_i$ times a capacity of the second branch. A sum of a capacity $Q_1$ of the first branch BR1 and a capacity $Q_2$ of the second branch BR2 is the same as an overall battery capacity Q, the capacity $Q_1$ of the first branch BR1 is $\alpha_i/(\alpha_i+1)$ times the overall battery capacity Q, and the capacity $Q_2$ of the first branch BR1 is $1/(\alpha_i+1)$ times the overall battery capacity Q.

The capacity ratio candidate values $\alpha_i$ may be a plurality of values selected in a range of 1 or more and 10 or less. According to another example, the capacity ratio candidate values $\alpha_i$ may be a plurality of values selected in a range of 1 or more and 5 or less. The capacity ratio candidate values $\alpha_i$ may be selected at an interval of 0.1.

According to the method of determining the capacity ratio $\alpha$ according to an embodiment, a current value and a voltage value measured at a battery terminal when the current value is applied to a battery are input at each pre-set timing interval $\Delta t$, and operations S22 to S28 are performed at each pre-set timing interval $\Delta t$ in response to the input current value and voltage value. When both the current value and the voltage value are input, other capacity ratio candidate values $\alpha_j$ are selected (S21) and operations S22 to S28 are repeatedly performed with respect to the capacity ratio candidate values $\alpha_j$. In operation S29, an optimal capacity ratio candidate value from among the capacity ratio candidate values $\alpha_i$ and $\alpha_j$ is determined as the capacity ratio $\alpha$.

Hereinafter, operations S22 to S27 for outputting calculated voltage values corresponding to current values for the capacity ratio candidate values $\alpha_i$ will be described.

A process of performing operations S22 to S27 from a previous timing k-1 that is earlier than a current timing k by the pre-set timing interval $\Delta t$ will be briefly described.

A current value $I_B[k-1]$ and a voltage value $V_B[k-1]$ of the previous timing k-1 may be input (S22). Distribution current values $I_1[k-1]$ and $I_2[k-1]$ distributed to the first and second branches BR1 and BR2 are estimated (S23). SOC values $SOC_1[k-1]$ and $SOC_2[k-1]$ of the first and second branches BR1 and BR2 are updated based on the distribution current values $I_1[k-1]$ and $I_2[k-1]$ of the first and second branches BR1 and BR2 (S24).

Open circuit voltage values $Voc_1[k-1]$ and $Voc_2[k-1]$, series resistance values $Rs_1[k-1]$ and $Rs_2[k-1]$, first parallel resistance values $Rp_{11}[k-1]$ and $Rp_{12}[k-1]$, second parallel resistance values $Rp_{21}[k-1]$ and $Rp_{22}[k-1]$, first capacitances $Cp_{11}[k-1]$ and $Cp_{12}[k-1]$, and second capacitances $Cp_{21}[k-1]$ and $Cp_{22}[k-1]$ of the first and second branches BR1 and BR2 are updated based on the SOC values $SOC_1[k-1]$ and $SOC_2[k-1]$ of the first and second branches BR1 and BR2 (S25). First voltage values $V_{11}[k-1]$ and $V_{12}[k-1]$ of both ends of first parallel resistors $Rp_{11}$ and $Rp_{12}$ and second voltage values $V_{21}[k-1]$ and $V_{22}[k-1]$ of both ends of second parallel resistors $Rp_{21}$ and $Rp_{22}$ of the first and second branches BR1 and BR2 are updated (S26).

A calculated voltage value $V_{B\_cal}[k-1]$ of the battery is calculated based on the open circuit voltage values $Voc_1[k-1]$ and $Voc_2[k-1]$, the distribution current values $I_1[k-1]$ and $I_2[k-1]$, the series resistance values $Rs_1[k-1]$ and $Rs_2[k-1]$, the first voltage values $V_{11}[k-1]$ and $V_{12}[k-1]$, and the second voltage values $V_{21}[k-1]$ and $V_{22}[k-1]$ of the first and second branches BR1 and BR2 (S27).

When the pre-set timing interval $\Delta t$ passes (S110) to reach the current timing k, a current value $I_B[k]$ and a voltage value $V_B[k]$ of the current timing k are input (S22). Input current $I_B$ is distributed to the first and second branches BR1 and BR2.

A first distribution current value $I_1[k]$ distributed to the first branch BR1 and a second distribution current value $I_2[k]$ distributed to the second branch BR2 are estimated (S23). The first distribution current value $I_1[k]$ may be estimated based on the first and second open circuit voltage values $Voc_1[k-1]$ and $Voc_2[k-1]$, the first and second series resistance values $Rs_1[k-1]$ and $Rs_2[k-1]$, and the first voltage values $V_{11}[k-1]$ and $V_{12}[k-1]$ and the second voltage values $V_{21}[k-1]$ and $V_{22}[k-1]$ of the first and second branches BR1 and BR2, updated at the previous timing k-1, and the current value $I_B[k]$ received at the current timing k. According to an example, the first distribution current value $I_1[k]$ may be estimated by using Equation 1.

The first and second open circuit voltage values $Voc_1[k-1]$ and $Voc_2[k-1]$ and the first and second series resistance values $Rs_1[k-1]$ and $Rs_2[k-1]$ may be values updated in operation S25 of the previous timing k-1. The first voltage values $V_{11}[k-1]$ and $V_{12}[k-1]$ and the second voltage values $V_{21}[k-1]$ and $V_{22}[k-1]$ of the first and second branches BR1 and BR2 may be values updated in operation S26 of the previous timing k-1.

The second distribution current value $I_2[k]$ may be estimated by using Equation 2.

A first SOC value $SOC_1[k]$ of the first branch BR1 is updated based on the first distribution current value $I_1[k]$,

and a second SOC value $SOC_2[k]$ of the second branch BR2 is updated based on the second distribution current value $I_2[k]$ (S24). For example, the first SOC value $SOC_1[k]$ and the second SOC value $SOC_2[k]$ may be calculated by using a current integration method.

According to an example, the first SOC value $SOC_1[k]$ may be calculated based on the first distribution current value $I_1[k]$ and the first SOC value $SOC_1[k-1]$ of the previous timing k-1. The second SOC value $SOC_2[k]$ may be calculated based on the second distribution current value $I_2[k]$ and the second SOC value $SOC_2[k-1]$ of the previous timing k-1. For example, the first SOC value $SOC_1[k]$ may be calculated by using Equation 3, and the second SOC value $SOC_2[k]$ may be calculated by using Equation 4.

A first open circuit voltage value $Voc_1[k]$, a first series resistance value $Rs_1[k]$, a first parallel resistance value $Rp_{11}[k]$, a second parallel resistance value $Rp_{21}[k]$, a first capacitance $Cp_{11}[k]$, and a second capacitance $Cp_{21}[k]$ of the first branch BR1 are updated based on the first SOC value $SOC_1[k]$, and a second open circuit voltage value $Voc_2[k]$, a second series resistance value $Rs_2[k]$, a first parallel resistance value $Rp_{11}[k]$, a second parallel resistance value $Rp_{22}[k]$, a first capacitance $Cp_{12}[k]$, and a second capacitance $Cp_{22}[k]$ of the second branch BR2 are updated based on the second SOC value $SOC_2[k]$ (S25).

When the first SOC value $SOC_1[k]$ and the second SOC value $SOC_2[k]$ are determined in operation S25, by using the SOC-Voc data 121 (see FIG. 3), the first open circuit voltage value $Voc_1[k]$ of the first branch BR1 is determined to be a value corresponding to the first SOC value $SOC_1[k]$, and the second open circuit voltage value $Voc_2[k]$ of the second branch BR2 is determined to be a value corresponding to the second SOC value $SOC_2[k]$.

The first series resistance value $Rs_1[k]$ of the first branch BR1 is determined to be a value obtained by multiplying a series resistance value $Rs(SOC_1[k])$ corresponding to the first SOC value $SOC_1[k]$ by a first coefficient k1 by using the SOC-Rs data 122 (see FIG. 3) stored in the memory 120 (see FIG. 3), and the second series resistance value $Rs_2[k]$ of the second branch BR2 is determined to be a value obtained by multiplying a series resistance value $Rs(SOC_2[k])$ corresponding to the second SOC value $SOC_2[k]$ by a sixth coefficient k6 by using the SOC-Rs data 122 (see FIG. 3) stored in the memory 120 (see FIG. 3).

The first parallel resistance value $Rp_{11}[k]$ and the second parallel resistance value $Rp_{21}[k]$ of the first branch BR1 are determined to be values obtained by multiplying a first parallel resistance value $Rp_1(SOC_1[k])$ and a second parallel resistance value $Rp_2(SOC_1[k])$ corresponding to the first SOC value $SOC_1[k]$ by a second coefficient k2 and a third coefficient k3 by using the SOC-$Rp_1$ & $Rp_2$ data 123 (see FIG. 3) stored in the memory 120 (see FIG. 3). The first parallel resistance value $Rp_{12}[k]$ and the second parallel resistance value $Rp_{22}[k]$ of the second branch BR2 are determined to be values obtained by multiplying a first parallel resistance value $Rp_1(SOC_2[k])$ and a second parallel resistance value $Rp_2(SOC_2[k])$ corresponding to the second SOC value $SOC_2[k]$ by a seventh coefficient k7 and an eighth coefficient k8 by using the SOC-$Rp_1$ & $Rp_2$ data 123 (see FIG. 3) stored in the memory 120 (see FIG. 3).

The first capacitance $Cp_{11}[k]$ and the second capacitance $Cp_{21}[k]$ of the first branch BR1 are calculated to be values obtained by multiplying a first capacitance $Cp_1(SOC_1[k])$ and a second capacitance $Cp_2(SOC_1[k])$ corresponding to the first SOC value $SOC_1[k]$ by a fourth coefficient k4 and a fifth coefficient k5 by using the SOC-$Cp_1$ & $Cp_2$ data 124 (see FIG. 3) stored in the memory 120 (see FIG. 3). The first capacitance $Cp_{12}[k]$ and the second capacitance $Cp_{22}[k]$ of the second branch BR2 are determined to be values obtained by multiplying a first capacitance $Cp_1(SOC_2[k])$ and a second capacitance $Cp_2(SOC_2[k])$ corresponding to the second SOC value $SOC_2[k]$ by a ninth coefficient k9 and a tenth coefficient k10 by using the SOC-$Cp_1$ & $Cp_2$ data 123 (see FIG. 3) stored in the memory 120 (see FIG. 3).

According to another example, the first capacitance $Cp_{11}[k]$ and the second capacitance $Cp_{21}[k]$ of the first branch BR1, and the first capacitance $Cp_{12}[k]$ and the second capacitance $Cp_{22}[k]$ of the second branch BR2 may be determined to be constants regardless of the first SOC value $SOC_1[k]$ and the second SOC value $SOC_2[k]$.

The first to tenth coefficients k1 to k10 may be determined based on the capacity ratio candidate values $\alpha_i$. The first to third coefficients k1, k2, and k3 may be $1+1/\alpha_i$, and the sixth to eighth coefficients k6, k7, and k8 may be $1+\alpha_i$. The fourth and fifth coefficients k4 and k5 may be $(1+1/\alpha_i)^{-1}$, that is, $\alpha_i/(1+\alpha_i)$, and the ninth and tenth coefficients k9 and k10 may be $(1+\alpha_i)^{-1}$, that is, $1/(1+\alpha_i)$.

In this case, the first series resistance value $Rs_1[k]$, the first parallel resistance value $Rp_{11}[k]$, and the second parallel resistance value $Rp_{21}[k]$ of the first branch BR1 may be respectively determined to be $(1+1/\alpha_i) * Rs(SOC_1[k])$, $(1+1/\alpha_i) * Rp_1(SOC_1[k])$, and $(1+1/\alpha_i) * Rp_2(SOC_1[k])$. The first capacitance $Cp_{11}[k]$ and the second capacitance $Cp_{21}[k]$ of the first branch BR1 may be respectively determined to be $\alpha_i/(1+\alpha_i) * Cp_1(SOC_1[k])$ and $\alpha_i/(1+\alpha_i) * Cp_2(SOC_1[k])$.

The second series resistance value $Rs_2[k]$, the first parallel resistance value $Rp_{12}[k]$, and the second parallel resistance value $Rp_{22}[k]$ of the second branch BR2 may be respectively determined to be $(1+\alpha_i) * Rs(SOC_2[k])$, $(1+\alpha_i) * Rp_1(SOC_2[k])$, and $(1+\alpha_i) * Rp_2(SOC_2[k])$. The first capacitance $Cp_{12}[k]$ and the second capacitance $Cp_{22}[k]$ of the second branch BR2 may be respectively determined to be $1/(1+\alpha_i) * Cp_1(SOC_2[k])$ and $1/(1+\alpha_i) * Cp_2(SOC_2[k])$.

The first voltage value $V_{11}[k]$ and the second voltage value $V_{21}[k]$ of the first branch BR1 and the first voltage value $V_{12}[k]$ and the second voltage value $V_{22}[k]$ of the second branch Br2 are updated (S26).

The first voltage value $V_{11}[k]$ of the first branch BR1 may be updated based on the first voltage value $V_{11}[k-1]$ of the previous timing k-1, and the first distribution current $I_1[k]$, the first parallel resistance value $Rp_{11}[k]$, and the first

capacitance $Cp_{11}[k]$ of the current timing k. For example, the first voltage value $V_{11}[k]$ of the first branch BR1 may be calculated according to Equation 5.

The second voltage value $V_{21}[k]$ of the first branch BR1 may be updated based on the second voltage value $V_{21}[k-1]$ of the previous timing k-1, and the first distribution current $I_1[k]$, the second parallel resistance value $Rp_{21}[k]$, and the second capacitance $Cp_{21}[k]$ of the current timing k. For example, the second voltage value $V_{21}[k]$ of the first branch BR1 may be calculated according to Equation 6.

The first voltage value $V_{12}[k]$ of the second branch BR2 may be updated based on the first voltage value $V_{12}[k-1]$ of the previous timing k-1, and the second distribution current $I_2[k]$, the first parallel resistance value $Rp_{11}[k]$, and the first capacitance $Cp_{12}[k]$ of the current timing k. For example, the first voltage value $V_{12}[k]$ of the second branch BR2 may be calculated according to Equation 7.

The second voltage value $V_{22}[k]$ of the second branch BR2 may be updated based on the second voltage value $V_{22}[k-1]$ of the previous timing k-1, and the second distribution current $I_2[k]$, the second parallel resistance value $Rp_{22}[k]$, and the second capacitance $Cp_{22}[k]$ of the current timing k. For example, the second voltage value $V_{22}[k]$ of the second branch BR2 may be calculated according to Equation 8.

A first calculated voltage value $V_{B1\_cal}[k]$ of the battery is calculated based on the first open circuit voltage value $Voc_1[k]$, the first distribution current value $I_1[k]$, the first series resistance value $Rs_1[k]$, and the first voltage value $V_{11}[k]$ and the second voltage value $V_{21}[k]$ of the first branch BR1, and a second calculated voltage value $V_{B2\_cal}[k]$ of the battery is calculated based on the second open circuit voltage value $Voc_2[k]$, the second distribution current value $I_2[k]$, the second series resistance value $Rs_2[k]$, and the first voltage value $V_{12}[k]$ and the second voltage value $V_{22}[k]$ of the second branch BR2.

For example, the first calculated voltage value $V_{B1\_cal}[k]$ and the second calculated voltage value $V_{B2\_cal}[k]$ may be calculated by Equation 12.

【Equation 12】

$$V_{B1\_cal} = Voc_1[k] - V_{11}[k] - V_{21}[k] - I_1[k]Rs_1[k]$$

$$V_{B2\_cal} = Voc_2[k] - V_{12}[k] - V_{22}[k] - I_2[k]Rs_2[k]$$

A calculated voltage value $V_{B\_cal}[k]$ of the battery is determined based on the first calculated voltage value $V_{B1\_cal}[k]$ and the second calculated voltage value $V_{B2\_cal}[k]$ (S27). For example, the calculated voltage value $V_{B\_cal}[k]$ of the battery may be one of the first calculated voltage value $V_{B1\_cal}[k]$ and the second calculated voltage value $V_{B2\_cal}[k]$, or may be an average value of the first calculated voltage value $V_{B1cal}[k]$ and the second calculated voltage value $V_{B2\_cal}[k]$.

A deviation between the first calculated voltage value $V_{B1\_cal}[k]$ and the second calculated voltage value $V_{B2\_cal}[k]$ may be compared with a pre-set reference value, and when the deviation between the first calculated voltage value $V_{B1\_cal}[k]$ and the second calculated voltage value $V_{B2\_cal}[k]$ is within the pre-set reference value, the calculated voltage value $V_{B\_cal}[k]$ of the battery may be determined based on the first calculated voltage value $V_{B1\_cal}[k]$ and the second calculated voltage value $V_{B2\_cal}[k]$.

When the deviation between the first calculated voltage value $V_{B1\_cal}[k]$ and the second calculated voltage value $V_{B2\_cal}[k]$ exceeds the pre-set reference, a process of calculating a calculated voltage value of the battery may not be performed with the capacity ratio candidate values $\alpha_i$, but a process of calculating a calculated voltage value of the battery may be performed with respect to other capacity ratio candidate values $\alpha_j$.

When the calculated voltage value $V_{B\_cal}[k]$ of the battery is calculated (S27), a current value $I_B[k+1]$ and a voltage value $V_B[k+1]$ of a next timing k+1 are input (S22). A calculated voltage value $V_{B\_cal}[k+1]$ is calculated by repeatedly performing operations S23-27 with respect to the input current value $I_B[k+1]$. In this way, calculated voltage values of all current values may be calculated.

Next, calculated voltage values of all current values may also be calculated for other capacity ratio candidate values $\alpha_j$.

An error between the calculated voltage value $V_{B\_cal}[k]$ for each capacity ratio candidate value $\alpha_j$ and the voltage value $V_{B\_cal}[k]$ input in operation S22 may be calculated, and the capacity ratio candidate value $\alpha_j$ having a smallest error may be determined as the capacity ratio $\alpha$ (S29). For example, the capacity ratio $\alpha$ may be determined by Equation 13.

【Equation 13】

$$\alpha = arg\min_{\alpha} \sum_{k} \left(V_{B\_cal}[k] - V_B[k]\right)^2$$

Because the capacity ratio $\alpha$ determined as described above reflects non-uniformity of an internal state of the battery, accurate modeling and simulation of the battery may be provided.

The spirit of the present disclosure is not limited to the above-described embodiments, and all ranges equivalent to the claims or equivalently changed therefrom as well as the claims described below belong to the scope of the spirit of the present disclosure.

**Claims**

1.  A battery simulation method performed by a computing device comprising a processor and a memory, the battery simulation method comprising:

      selecting an equivalent circuit model of a battery comprising first and second branches comprising a voltage source connected in series, a series resistor, a first parallel resistor and a first capacitor connected in parallel, and a second parallel resistor and a second capacitor connected in parallel;
      setting a capacity ratio of the first and second branches;
      receiving a current value;
      estimating a distribution current value distributed to each branch;
      updating a state of charge (SOC) value of each branch, based on the distribution current value of each branch;
      determining an open circuit voltage value, a series resistance value, a first parallel resistance value, a second parallel resistance value, a first capacitance, and a second capacitance of each branch, based on the SOC value of each branch;
      determining a first voltage value of both ends of the first parallel resistor and a second voltage value of both ends of the second parallel resistor, of each branch;
      calculating a G parameter value and an H parameter value of the battery, based on the open circuit voltage value, the series resistance value, the first voltage value, and the second voltage value, of each branch; and
      calculating an estimated voltage value of the battery, based on the G parameter value and the H parameter value of the battery.

2.  The battery simulation method of claim 1, wherein

      the G parameter value of the battery is a value indicating a sensitivity of a voltage to a change in current of the battery, and
      the H parameter of the battery is a value indicating an effective potential determined by a local equilibrium potential distribution and a resistance distribution in the battery.

3.  The battery simulation method of claim 1, wherein the calculating of the G parameter value and the H parameter value of the battery comprises:

      calculating a G parameter value and an H parameter value of each branch, based on the open circuit voltage value, the series resistance value, the first voltage value, and the second voltage value, of each branch; and
      calculating a G parameter value and an H parameter value of the battery, based on the G parameter value and the H parameter value of each branch.

4.  The battery simulation method of claim 3, wherein

      the G parameter value of each branch is determined to be the series resistance value of each branch, and
      the H parameter value of each branch is determined to be a value obtained by subtracting the first voltage value and the second voltage value of each branch from the open circuit voltage value of each branch.

5.  The battery simulation method of claim 3, wherein

the G parameter value of the battery is determined by $G_B[k] = ((G_1[k])^{-1}+(G_2[k])^{-1})^{-1}$, and

the H parameter value of the battery is determined by $H_B[k] = (H_1[k]/G_1[k] + H_2[k]/G_2[k]) / (1/G_1[k] + 1/G_2[k])$,

wherein $G_B[k]$ and $H_B[k]$ are respectively the G parameter value and the H parameter value of the battery, $G_1[k]$ and $H_2[k]$ are respectively the G parameter value and the H parameter value of the first branch, and $G_1[k]$ and $H_2[k]$ are respectively the G parameter value and the H parameter value of the second branch.

6. The battery simulation method of claim 1, wherein an estimated voltage value of the battery is calculated by $V_{B\_est}[k] = H_B[k] + G_B[k] * I_B[k]$,

wherein $V_{B\_est}[k]$ is the estimated voltage value of the battery, $G_B[k]$ and $H_B[k]$ are respectively the G parameter value and the H parameter value of the battery, and $I_B[k]$ is the current value.

7. The battery simulation method of claim 1, further comprising receiving parameter data of each of parameter values for an SOC value, collected for a 1-branch equivalent circuit model comprising a voltage source connected in series, a series resistor, a first parallel resistor and a first capacitor connected in parallel, and a second parallel resistor and a second capacitor connected in parallel,

wherein the parameter values comprise an open circuit voltage value, a series resistance value, a first parallel resistance value, a second parallel resistance value, a first capacitance, and a second capacitance of the 1-branch equivalent circuit model.

8. The battery simulation method of claim 7, wherein the open circuit voltage value, the series resistance value, the first parallel resistance value, the second parallel resistance value, the first capacitance, and the second capacitance of each branch are determined based on the SOC value of each branch and a capacity ratio $\alpha$ of the first and second branches by referring to the parameter data,

wherein a capacity of the first branch and a capacity of the second branch are set to $\alpha$ : 1.

9. The battery simulation method of claim 1, wherein

the first voltage value of each branch is calculated based on a first previous voltage value of both ends of the first parallel resistor of each branch, the distribution current value distributed to each branch, and the first parallel resistance value and the first capacitance of each branch, and

the second voltage value of each branch is calculated based on a second previous voltage value of both ends of the second parallel resistor of each branch, the distribution current value distributed to each branch, and the second parallel resistance value and the second capacitance of each branch.

10. The battery simulation method of claim 1, wherein the SOC value of each branch is calculated by using a current integration method based on a previous SOC value of each branch and the distribution current value of each branch.

11. The battery simulation method of claim 1, wherein the distribution current value of each branch is calculated based on the current value, a previous open circuit voltage value of each of the first and second branches, a previous series resistance value, a first previous voltage value, and a second previous voltage value.

12. The battery simulation method of claim 1, wherein the setting of the capacity ratio of the first and second branches comprises:

selecting candidate capacity ratios of the first and second branches;

receiving an input current value and an input voltage value;

estimating a distribution current value distributed to each branch;

updating an SOC value of each branch, based on the distribution current value of each branch;

determining an open circuit voltage value, a series resistance value, a first parallel resistance value, a second parallel resistance value, a first capacitance, and a second capacitance of each branch, based on the SOC value of each branch;

determining a first voltage value of both ends of the first parallel resistor and a second voltage value of both ends of the second parallel resistor of each branch;

calculating a calculated voltage value of the battery; and

determining a candidate capacity ratio at which a difference between the input voltage value and the calculated voltage value of the battery is a minimum value as the capacity ratio.

13. A computer program stored in a medium to execute the battery simulation method according to any one of claims 1 to 12 by using a computing device comprising a processor and a memory.

# FIG. 1

# FIG. 2

# FIG. 3

120

121
SOC−Voc DATA

122
SOC−Rs DATA

123
SOC−Rp$_1$ & Rp$_2$ DATA

124
SOC−Cp$_1$ & Cp$_2$ DATA

# FIG. 4A

Rs @ SOC

# FIG. 4B

Rp1 &Rp2 @ SOC

# FIG. 5

INITIAL VALUE DATA

200

INPUT DATA → BATTERY MODEL → OUTPUT DATA

CAPACITY RATIO ($\alpha$)

FIG. 6

# FIG. 7

```
┌─────────────────────────────────────────┐
│        RECEIVE PARAMETER DATA OF         │── S10
│     1-BRANCH EQUIVALENT CIRCUIT MODEL     │
└─────────────────────────────────────────┘
                    │
                    ▼
┌─────────────────────────────────────────┐
│            SET CAPACITY RATIO α          │── S20
└─────────────────────────────────────────┘
                    │
                    ▼
┌─────────────────────────────────────────┐
│             INPUT CURRENT VALUE          │── S30
└─────────────────────────────────────────┘
                    │
                    ▼
┌─────────────────────────────────────────┐
│      ESTIMATE CURRENT VALUE DISTRIBUTED  │── S40
│               TO EACH BRANCH             │
└─────────────────────────────────────────┘
                    │
                    ▼
┌─────────────────────────────────────────┐
│       UPDATE SOC VALUE OF EACH BRANCH    │── S50
└─────────────────────────────────────────┘
                    │
                    ▼
┌─────────────────────────────────────────┐
│   UPDATE PARAMETER VALUE OF EACH BRANCH, │── S60
│      BASED ON SOC VALUE OF EACH BRANCH   │
└─────────────────────────────────────────┘
                    │                          ┌──────────────┐
                    ▼                          │ NEXT TIMING  │── S110
┌─────────────────────────────────────────┐   └──────────────┘
│    UPDATE FIRST AND SECOND VOLTAGE VALUES│── S70
│              OF EACH BRANCH              │
└─────────────────────────────────────────┘
                    │
                    ▼
┌─────────────────────────────────────────┐
│       CALCULATE G PARAMETER VALUE AND    │── S80
│      H PARAMETER VALUE OF EACH BRANCH    │
└─────────────────────────────────────────┘
                    │
                    ▼
┌─────────────────────────────────────────┐
│       CALCULATE G PARAMETER VALUE AND    │── S90
│       H PARAMETER VALUE OF BATTERY       │
└─────────────────────────────────────────┘
                    │
                    ▼
┌─────────────────────────────────────────┐
│ CALCULATE ESTIMATED VOLTAGE VALUE OF BATTERY │── S100
└─────────────────────────────────────────┘
```

# FIG. 8

Legend:
— VOLTAGE VALUE
----- ESTIMATED VOLTAGE VALUE (1-BRANCH ECM)
— ESTIMATED VOLTAGE VALUE (2-BRANCH ECM)

Y-axis: Voltage, V (4.1, 4.0, 3.9, 3.8, 3.7, 3.6, 3.5, 3.4)

X-axis: Time, sec (0, 500, 1000, 1500, 2000, 2500, 3000)

# FIG. 9

INITIAL VALUE DATA

INPUT DATA →

300

BATTERY MODEL

→ CAPACITY RATIO ($\alpha$)

OUTPUT DATA

# FIG. 10

SET CAPCAITY RATIO CANDIDATE VALUES $\alpha_i$ — S21

INPUT CURRENT VALUE AND VOLTAGE VALUE — S22

ESTIMATE CURRENT VALUE DISTRIBUTED TO EACH BRANCH — S23

UPDATE SOC VALUE OF EACH BRANCH — S24

UPDATE PARAMETER VALUE OF EACH BRANCH, BASED ON SOC VALUE OF EACH BRANCH — S25

NEXT TIMING — S28

UPDATE FIRST AND SECOND VOLTAGE VALUES OF EACH BRANCH — S26

CALCULATE CALCULATED VOTLAGE VALUE OF BATTERY — S27

DETERMINE CAPACITY RATIO $\alpha$ — S29

## INTERNATIONAL SEARCH REPORT

| International application No. |
| --- |
| **PCT/KR2021/018153** |

**A.    CLASSIFICATION OF SUBJECT MATTER**

**G01R 31/367**(2019.01)i; **G01R 31/36**(2006.01)i; **G01R 31/389**(2019.01)i; **G01R 31/396**(2019.01)i

According to International Patent Classification (IPC) or to both national classification and IPC

**B.    FIELDS SEARCHED**

Minimum documentation searched (classification system followed by classification symbols)

G01R 31/367(2019.01); G01R 31/36(2006.01); G06F 17/50(2006.01); H01M 10/48(2006.01); H01M 4/505(2010.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 배터리(battery), 시뮬레이션(simulation), 등가회로(equivalent circuit), 브랜치(branch), 충전 상태(state of charge), G 파라미터(G parameter)

**C.    DOCUMENTS CONSIDERED TO BE RELEVANT**

| Category* | Citation of document, with indication, where appropriate, of the relevant passages | Relevant to claim No. |
| --- | --- | --- |
| Y | KR 10-2013-0139758 A (LG CHEM, LTD.) 23 December 2013 (2013-12-23)<br>See paragraphs [0059]-[0062], [0122]-[0127], [0161]-[0166], [0183]-[0189], [0219]-[0221] and [0271]-[0297]; claims 5, 10-13 and 38; and figures 5-7. | 1-13 |
| Y | KR 10-2019-0123172 A (SAMSUNG SDI CO., LTD.) 31 October 2019 (2019-10-31)<br>See paragraphs [0075]-[0076], [0121]-[0122] and [0147]-[0148]; claims 1 and 4; and figures 1-3. | 1-13 |
| A | KR 10-2013-0134982 A (LG CHEM, LTD.) 10 December 2013 (2013-12-10)<br>See paragraphs [0023]-[0143]; claims 1-23; and figures 1-20. | 1-13 |
| A | US 2014-0244225 A1 (THE UNIVERSITY OF CONNECTICUT et al.) 28 August 2014 (2014-08-28)<br>See paragraphs [0101]-[0305]; claims 1-17; and figures 11-13D. | 1-13 |
| A | US 2013-0138369 A1 (PAPANA, Anki Reddy et al.) 30 May 2013 (2013-05-30)<br>See paragraphs [0025]-[0047]; claims 1-18; and figures 5-9. | 1-13 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **08 March 2022** | **08 March 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

International application No.

**PCT/KR2021/018153**

| Patent document cited in search report | | | Publication date (day/month/year) | Patent family member(s) | | | Publication date (day/month/year) |
|---|---|---|---|---|---|---|---|
| KR | 10-2013-0139758 | A | 23 December 2013 | CN | 104364668 | A | 18 February 2015 |
| | | | | CN | 104364668 | B | 22 February 2017 |
| | | | | EP | 2835658 | A1 | 11 February 2015 |
| | | | | EP | 2835658 | A4 | 07 October 2015 |
| | | | | EP | 2835658 | B1 | 19 October 2016 |
| | | | | EP | 3136118 | A1 | 01 March 2017 |
| | | | | EP | 3136118 | B1 | 31 January 2018 |
| | | | | JP | 2015-527566 | A | 17 September 2015 |
| | | | | JP | 6081584 | B2 | 15 February 2017 |
| | | | | KR | 10-1454828 | B1 | 28 October 2014 |
| | | | | US | 2013-0335031 | A1 | 19 December 2013 |
| | | | | US | 2013-0338950 | A1 | 19 December 2013 |
| | | | | US | 2013-0342169 | A1 | 26 December 2013 |
| | | | | US | 2014-0132222 | A1 | 15 May 2014 |
| | | | | US | 8653794 | B2 | 18 February 2014 |
| | | | | US | 8742727 | B2 | 03 June 2014 |
| | | | | US | 9046583 | B2 | 02 June 2015 |
| | | | | US | 9207287 | B2 | 08 December 2015 |
| | | | | WO | 2013-187583 | A1 | 19 December 2013 |
| KR | 10-2019-0123172 | A | 31 October 2019 | CN | 112005124 | A | 27 November 2020 |
| | | | | EP | 3786653 | A1 | 03 March 2021 |
| | | | | EP | 3786653 | A4 | 29 December 2021 |
| | | | | JP | 2021-520178 | A | 12 August 2021 |
| | | | | US | 2021-0048480 | A1 | 18 February 2021 |
| | | | | WO | 2019-208924 | A1 | 31 October 2019 |
| KR | 10-2013-0134982 | A | 10 December 2013 | KR | 10-1355973 | B1 | 27 January 2014 |
| US | 2014-0244225 | A1 | 28 August 2014 | CN | 104007390 | A | 27 August 2014 |
| | | | | CN | 104007390 | B | 20 March 2018 |
| | | | | CN | 204269785 | U | 15 April 2015 |
| | | | | KR | 10-2014-0106436 | A | 03 September 2014 |
| | | | | US | 10664562 | B2 | 26 May 2020 |
| | | | | US | 2014-0244193 | A1 | 28 August 2014 |
| US | 2013-0138369 | A1 | 30 May 2013 | CN | 103149535 | A | 12 June 2013 |
| | | | | CN | 103149535 | B | 12 April 2017 |
| | | | | EP | 2597479 | A2 | 29 May 2013 |
| | | | | EP | 2597479 | A3 | 11 October 2017 |
| | | | | JP | 2013-122450 | A | 20 June 2013 |
| | | | | US | 9157966 | B2 | 13 October 2015 |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020200096938